**Europäisches Patentamt**

**European Patent Office**

**Office européen des brevets**

(19)

(11) Veröffentlichungsnummer: **0 142 069**

**A2**

(12) ## EUROPÄISCHE PATENTANMELDUNG

(21) Anmeldenummer: **84112668.3**

(22) Anmeldetag: **19.10.84**

(51) Int. Cl.⁴: **F 16 C 29/06**
**B 23 Q 1/26**

(30) Priorität: **04.11.83 CH 5954/83**

(43) Veröffentlichungstag der Anmeldung:
**22.05.85 Patentblatt 85/21**

(84) Benannte Vertragsstaaten:
**CH DE FR GB IT LI**

(71) Anmelder: **Werkzeugmaschinenfabrik Oerlikon-Bührle AG**
**Birchstrasse 155**
**CH-8050 Zürich(CH)**

(72) Erfinder: **Grabher, Erich**
**Haldengutstrasse 28**
**CH-8305 Dietlikon(CH)**

(72) Erfinder: **Müller, Max**
**Heidwiesen 14**
**CH-8051 Zürich(CH)**

(72) Erfinder: **Wetzel, Horst**
**Stiegelenstrasse 15c**
**CH-5430 Wettingen(CH)**

(72) Erfinder: **Schultschik, Robert, Dr. Ing.**
**Tägerackerstrasse 33a**
**CH-8610 Uster(CH)**

(54) **Vorspannelement für Umlaufschuhe und entsprechend wirkende Linearlager.**

(57) Vorspannelemente (1, 1') dienen zur Höheneinstellung bzw. zur Vorspannung von Umlaufschuhen. Zur Verminderung der Anforderungen an die Abstütz– und Montageflächen bei der Fabrikation und der Veränderungen der Parallelität bei der Vorspannungseinstellung und bei Belastungsänderungen, also im Bereich der elastischen Verformung, ist ein Gehäuse (11, 41) vorgesehen mit mindestens einer Führungsbahn (22, 46) und zwei darin mittels Spannschrauben (18, 19, 45) verstellbar geführten Keilen (14/15, 16/17; 43/44) sowie einer Stützplatte (12, 42), welche zwei Keilflächen (20, 50) aufweist, zum Zusammenwirken mit Keilflächen (13, 53) der Keile.

FIG. 1

EP 0 142 069 A2

0142069

## Vorspannelement für Umlaufschuhe und entsprechend wirkende Linearlager.

Die Erfindung bezieht sich auf ein Vorspannelement für Umlaufschuhe und entsprechend wirkende Linearlager für Längsführungen an Maschinen und Vorrichtungen, mit einer höhenverstellbaren Einrichtung.

Vorspannelemente dienen zur Höheneinstellung bzw. zur Vorspannung von Umlaufschuhen, welche z.B. als Wälzlager mit kontinuierlichem Wälzkörperumlauf ein genaues Positionieren von Schlittenführungen bei Werkzeugmaschinen etc. ermöglichen.

Aus der Praxis ist ein Vorspannelement bekannt, welches aus zwei geschliffenen Keilleisten, die mittels einer zentralen Passleiste gegenseitig geführt sind, und einer an einer Keilleiste stirnseitig befestigten Stellplatte mit Einstell- und Konterschrauben besteht. Zur Nutzung der maximalen Tragfähigkeit, der Steifigkeit und Laufruhe von bekannten Umlaufschuhen ist es unbedingt erforderlich, dass die Führungslaufbahn, die Abstützfläche und die Montageflächen am Vorspannelement sowie die Parallelitäten dieser Flächen bestmögliche Qualität aufweisen.

Die Erfindung, wie sie in den Ansprüchen gekennzeichnet ist, löst die Aufgabe, ein Vorspannelement zu schaffen, das eine Verminderung der Anforderungen an die Bearbeitungsqualität und die Parallelitäten der Abstützfläche und der Montageflächen des Vorspannelementes gestattet, ohne die Qualität der Tragfähigkeit, der Steifigkeit und Laufruhe von Umlaufschuhen zu mindern.

Die durch die Erfindung erreichten Vorteile sind im wesentlichen darin zu sehen, dass Ungenauigkeiten der Ausrichtflächen beim Einstellen der Vorspannung dreidimensional ausgleichbar und damit der Führungsfläche optimal anpassbar sind.

Im folgenden wird die Erfindung anhand von zwei Ausführungsbeispiele darstellenden Zeichnungen näher erläutert.
Es zeigt:
Fig.1 eine Ansicht einer eingebauten Umlaufeinheit, teilweise im Schnitt und gemäss Schnitt A-A von Fig.2,
Fig.2 eine Aufsicht auf einen Teil eines Vorspannelementes,
Fig.3 einen Teil eines Vorspannelementes in Aufsicht,
Fig.4 eine Ansicht eines zweiten Ausführungsbeispieles,
        teilweise im Schnitt und gemäss Schnitt B-B von Fig.5,
Fig.5 eine Aufsicht auf einen Teil des zweiten Ausführungsbeispieles,
Fig.6 das zweite Ausführungsbeispiel gemäss Schnitt C-C von
        Fig.5,

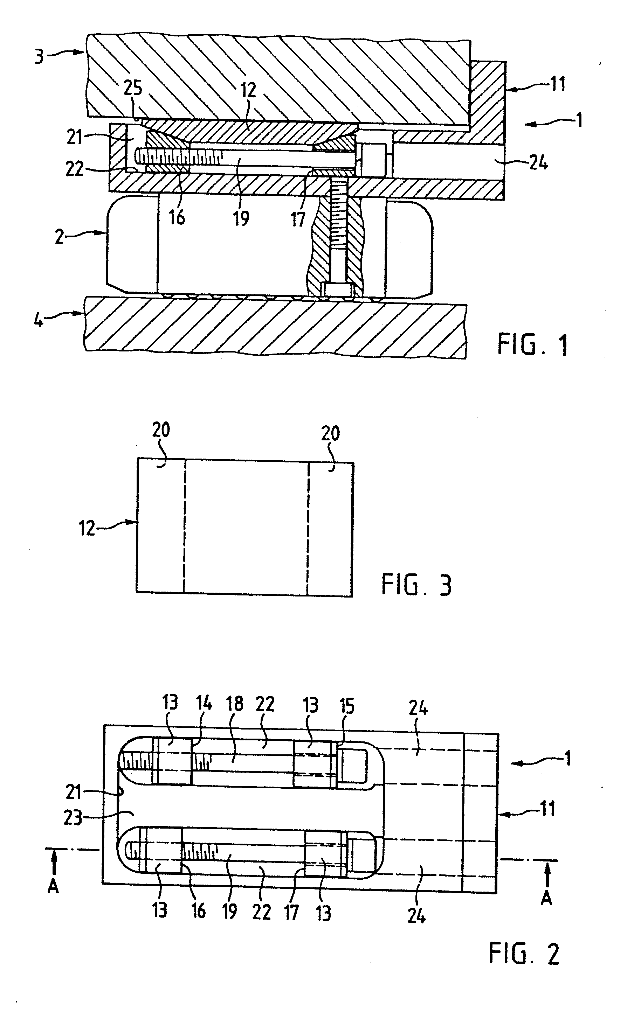

Fig.1 zeigt eine Umlaufeinheit, bestehend aus einem Vorspannelement 1 und einem daran befestigten Umlaufschuh 2,
eingebaut zwischen einem Schlitten 3 und einer Längsführung
4. In nicht näher dargestellter Weise kann das Vorspannelement 1 am Schlitten 3 befestigt sein. Wie auch in Fig.2 und
3 dargestellt, besteht ein Vorspannelement 1 aus einem Gehäuse 11, vier Keilen 14,15,16 und 17, zwei je zwei dieser
Keile verbindende Spannschrauben 18 und 19, sowie eine
Stützplatte 12. Zur besseren Übersicht ist die Stützplatte
12 gemäss Fig.3 in Fig.2 nicht eingezeichnet. Die entsprechende Lage ist jedoch aus Fig.1, bei der das Vorspannelement 1 nach Schnitt A-A von Fig.2 dargestellt ist, ersichtlich. Das Gehäuse 11 weist eine rechteckförmige und mit abgerundeten Kanten ausgebildete Ausnehmung 21 und zwei darin
vertieft angebrachte, durch einen Steg 23 getrennte, parallele Führungsbahnen 22 auf. In axialer Fortsetzung der Führungsbahnen ist je eine Bohrung 24 angebracht. In den Führungsbahnen 22 sind je zwei der Keile 14,15 bzw. 16,17 verschiebbar geführt und durch je die eine der Spannschrauben
18 bzw.19 verbunden und damit verstellbar angeordnet. Diese
Verstellung kann mit einem entsprechenden Schlüssel, z.B.
Imbusschlüssel, durch die Bohrung 24 von aussen vorgenommen
werden, indem die Keile 14 und 16 über ein Gewinde mit den
entsprechenden Spannschrauben 18 und 19 verbunden sind. Die Keile 15 und 17 weisen eine Durchgangsbohrung für den Spannschraubenschaft auf. An jedem der vier Keile 14-17 ist eine Keilfläche 13 und an der Stützplatte 12 sind zwei Keilflächen 20 derart angeordnet und ausgebildet, dass die Stützplatte 12 auf den vier Keilen 14-17 an den Keilflächen 20 und 13 aufliegt.

Genaue und starre Führungssysteme setzen Spielfreiheit und hohe Steifigkeit der Lagerung voraus. Dies wird erreicht, indem beispielsweise Umlaufschuhe paarweise oder zu dritt an jeder Lagerstelle eingebaut und gegeneinander vorgespannt werden. Mit dem erfindungsgemässen Vorspannelement 1 wird die Vorspannung erzielt, indem die Stützplatte 12 gegen eine Abstützfläche 25 des Schlittens 3 angepresst wird. Zur Höheneinstellung werden die Keile 14 und 15 bzw. 16 und 17 mit den Spannschrauben 18 bzw. 19 gleichmässig relativ zueinander verschoben. Querneigung bzw. Querverschwenkung wird durch unterschiedliche Höheneinstellung mit den Spannschrauben 18 und 19 bzw. der damit verbundenen Keilpaare 14 und 15 bzw. 16 und 17 ausgeglichen, wie dies in Fig.2 übertrieben dargestellt ist.

Ein Längsneigungsfehler wird korrigiert, indem sich die Stützplatte 12 infolge des Anpressdruckes der Vorspannkraft in Längsrichtung selbständig verschwenkt.

Vorzugsweise sind die beiden Keilflächen 20 der Stützplatte 12 im Tragbereich, d.h. im Bereich der möglichen Kontaktflächen mit den vier Keilflächen 13 der Keile 14 - 17, mindestens angenähert kalottenförmig (kugeloberflächenförmig) ausgebildet. Zusätzlich können die Keilflächen 13 der Keile 14-17 mit einer gegen die Mitte des Vorspannelementes 1 gerichteten Querneigung versehen werden. Die Stützplatte 12 ist nun angenähert kalottenförmig gelagert und kann damit die relativ kleinen Parallelitätsfehler durch die zweidimensionale Bewegungsfreiheit ausgleichen. Verkantungen an den Keilflächen 13 und 20 können dadurch vermieden werden.

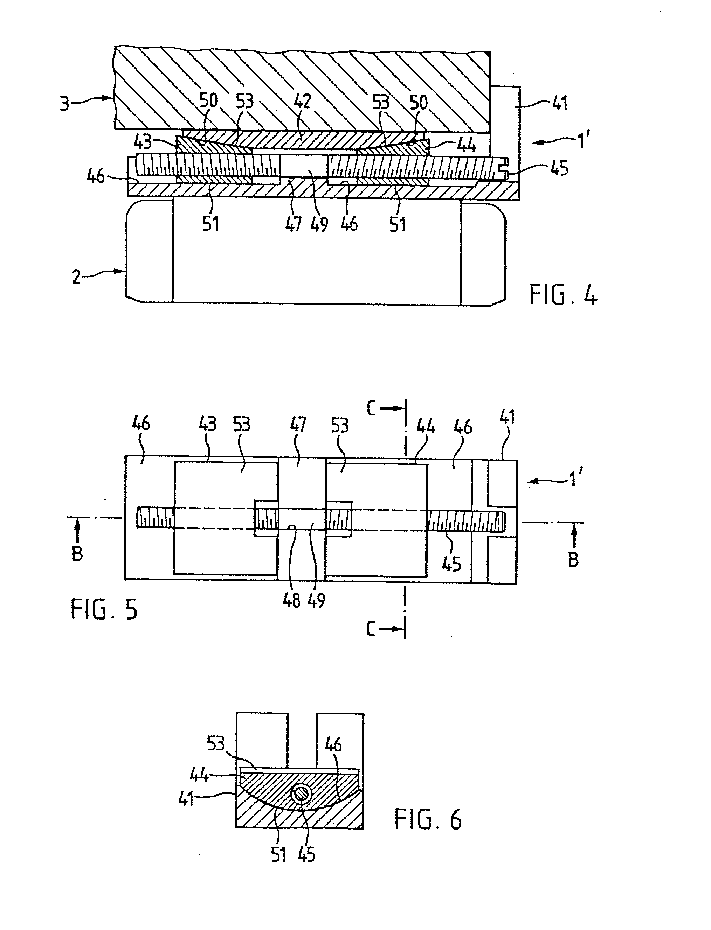

In Fig.4 ist ein zweites Vorspannelement 1' analog zu Fig.1 zwischen dem Schlitten 3 und dem Umlaufschuh 2 angeordnet. Es besteht aus einem Gehäuse 41, einer Stützplatte 42, zwei Keilen 43 und 44 und einer Spannschraube 45. Fig.5 und 6 zeigen ebenfalls das Vorspannelement 1', jedoch wiederum ohne Stützplatte 42. Eine in Längsrichtung im Gehäuse 41 angeordnete Führungsbahn 46 ist durch eine Führungsrippe 47, welche eine Führungsnut 48 für einen Schaftteil 49 der Spannschraube 45 aufweist, unterteilt und im Querschnitt kreisbogenförmig ausgebildet. In je einem Führungsbahnteil ist je einer der beiden Keile 43 und 44, welche zylinderabschnittförmig ausgebildet und mit einem Links- bzw. Rechtsgewinde versehen sind, in Längsrichtung linear verschiebbar geführt und durch die Spannschraube 45, welche ein Links- und ein Rechtsgewinde aufweist, relativ zueinander verstellbar. Die Stützplatte 42 weist wiederum zwei Keilflächen 50 auf, welche mit Keilflächen 53 an den beiden Keilen 43 und 44 zusammen wirken. Die im Querschnitt kreisbogenförmig ausgebildeten Führungsflächen 51 der beiden Keile 43 und 44 ermöglichen die Querverschwenkung in der entsprechend gegengleich ausgebildeten Führungsbahn 46. Um grössere Längsneigungsfehler sauber zu korrigieren, kann vorzugsweise die Stützplatte 42 zylinderabschnittförmig ausgebildet sein.

0142069 -

Patentansprüche

1. Vorspannelement (1,1') für Umlaufschuhe (2) und entsprechend wirkende Linearlager für Längsführungen (4) an Maschinen und Vorrichtungen, mit einer höhenverstellbaren Einrichtung, gekennzeichnet durch ein Gehäuse (11,41) mit mindestens einer Führungsbahn (22,46), zwei in jeder Führungsbahn (22,46) angeordnete, in Längsrichtung verstellbar geführte Keile (14/15, 16/17; 43/44), eine die zwei Keile (14/15, 16/17; 43/44) relativ zueinander verstellende Spannschraube (18,19;45) und eine Stützplatte (12,42) mit zwei Keilflächen (20,50),welche auf den Keilflächen (13/53) mindestens zweier Keile (14/15, 16/17; 43,44) aufliegen.

2. Vorspannelement gemäss Anspruch 1, dadurch gekennzeichnet, dass das Gehäuse (11) zwei parallele Führungsbahnen (22) aufweist und die beiden Keilflächen (20) der Stützplatte (12) auf den Keilflächen (13) von vier Keilen (14,15,16, 17) aufliegen.

3. Vorspannelement gemäss Anspruch 2, dadurch gekennzeichnetnet, dass die beiden Keilflächen (20) der Stützplatte (12) im Tragbereich mindestens angenähert kalottenförmig ausgebildet sind.

4. Vorspannelement gemäss Anspruch 3, dadurch gekennzeichnet, dass die Keilflächen (13) der Keile (14-17) eine Querneigung aufweisen.

5. Vorspannelement gemäss Anspruch 1, dadurch gekennzeichnet, dass das Gehäuse (41) nur eine Führungsbahn (46) aufweist und die zusammenwirkenden Führungsflächen (51) der zwei zugeordneten Keile (43,44) im Querschnitt kreisbogenförmig ausgebildet sind.

6. Vorspannelement gemäss Anspruch 5, dadurch gekennzeichnet, dass die Stützplatte (42) zylinderabschnittförmig ausgebildet ist.

FIG. 1

FIG. 3

FIG. 2

FIG. 4

FIG. 5

FIG. 6